# EUROPEAN PATENT SPECIFICATION

(11) **EP 4 381 370 B1**
(45) Date of publication and mention of the grant of the patent: **09.12.2026**
(21) Application number: 22854013.4
(22) Date of filing: 01.07.2022
(51) Int. Cl.: G06F 3/01, G06F 3/0354

(54) **AUGMENTED REALITY (AR) PEN/HAND TRACKING**
STIFT-/HANDVERFOLGUNG IN ERWEITERTER REALITÄT (AR)
SUIVI DE STYLO/MAIN EN RÉALITÉ AUGMENTÉE (RA)

(30) Priority: 03.08.2021 US 202117392846
(43) Date of publication of application: 12.06.2024
(73) Proprietor: Sony Interactive Entertainment Inc., Tokyo 108-0075 (JP)
(72) Inventor: TOKUBO, Todd, San Mateo, California 94404 (US)
(74) Representative: Gill Jennings & Every LLP
(86) International application number: PCT/US2022/073400
(87) International publication number: WO 2023/015082

(56) References cited:
- JP-B1- 6 710 845
- KR-A- 20090 083 504
- US-A1- 2015 316 982
- US-A1- 2018 285 636
- US-A1- 2020 286 302
- US-A1- 20230 108 954
- US-B1- 10 261 595

## Description

### FIELD

The present application relates to technically inventive, non-routine solutions that are necessarily rooted in computer technology and that produce concrete technical improvements.

### BACKGROUND

As understood herein, augmented reality (AR) computer simulations such as AR computer games can be enhanced using haptic feedback. Previously known arrangements are disclosed in JP 6 710845, KR 2009 0083504, US 2015/316982, and US 2020/286302.

### SUMMARY

A method includes identifying from at least image a pose of a hand holding an object. The method also includes, based at least in part on the pose, identifying a haptic feedback, and implementing the haptic feedback on the object.

In some embodiments the pose is a first pose, the haptic feedback is first haptic feedback, and the method further includes identifying a second pose of the hand holding an object. The method may include, based at least in part on the second pose, identifying a second haptic feedback, and implementing the second haptic feedback on the object. The object on which the second haptic feedback is implemented may be the same or a different object on which the first haptic feedback is implemented.

In example implementations the method may include, based at least in part on the pose, altering at least one user interface (UI). If desired, the method may include, based on a size of the object, identifying a size of the hand, and using the size of the hand, presenting on at least one display a virtualization of the hand. In some examples the method can include, based at least in part on the image, tracking a portion of the object hidden by the hand in the image, and presenting on at least one display a virtualization of the object based at least in part on the tracking.

In another aspect, an apparatus, includes an augmented reality (AR) head-mounted display (HMD). The apparatus further includes at least one physical object comprising at least one haptic generator, and at least one camera for imaging a hand of a wearer of the HMD holding the object. The image can be provided to at least one processor to produce, using the haptic generator, a tactile signal in accordance with a pose of the hand in the image.

In another aspect, a device includes at least one computer storage that is not a transitory signal and that in turn includes instructions executable by at least one processor to receive at least a first image. The instructions are executable to identify from the first image a first pose of a hand holding a first object, correlate the first pose to a first haptic signal, and implement the first haptic signal on the first object.

The details of the present application, both as to its structure and operation, can best be understood in reference to the accompanying drawings, in which like reference numerals refer to like parts, and in which:

### BRIEF DESCRIPTION OF THE DRAWINGS

Figure 1 is a block diagram of an example system including an example in accordance with present principles;
Figure 2 illustrates a specific system consistent with present principles;
Figures 3-5 illustrate example hand poses and object types;
Figure 6 illustrates example logic in example flow chart format;
Figure 7 illustrates a user interface consistent with present principles; and
Figures 9 and 10 illustrate additional example logic consistent with present principles.

### DETAILED DESCRIPTION

This disclosure relates generally to computer ecosystems including aspects of consumer electronics (CE) device networks such as but not limited to computer game networks. A system herein may include server and client components which may be connected over a network such that data may be exchanged between the client and server components. The client components may include one or more computing devices including game consoles such as Sony PlayStation^{®} or a game console made by Microsoft or Nintendo or other manufacturer, virtual reality (VR) headsets, augmented reality (AR) headsets, portable televisions (e.g., smart TVs, Internet-enabled TVs), portable computers such as laptops and tablet computers, and other mobile devices including smart phones and additional examples discussed below. These client devices may operate with a variety of operating environments. For example, some of the client computers may employ, as examples, Linux operating systems, operating systems from Microsoft, or a Unix operating system, or operating systems produced by Apple, Inc., or Google. These operating environments may be used to execute one or more browsing programs, such as a browser made by Microsoft or Google or Mozilla or other browser program that can access websites hosted by the Internet servers discussed below. Also, an operating environment according to present principles may be used to execute one or more computer game programs.

Servers and/or gateways may include one or more processors executing instructions that configure the servers to receive and transmit data over a network such as the Internet. Or a client and server can be connected over a local intranet or a virtual private network. A server or controller may be instantiated by a game console such as a Sony PlayStation^{®}, a personal computer, etc.

Information may be exchanged over a network between the clients and servers. To this end and for security, servers and/or clients can include firewalls, load balancers, temporary storages, and proxies, and other network infrastructure for reliability and security. One or more servers may form an apparatus that implement methods of providing a secure community such as an online social website to network members.

A processor may be a single- or multi-chip processor that can execute logic by means of various lines such as address lines, data lines, and control lines and registers and shift registers.

Components included in one embodiment can be used in other embodiments in any appropriate combination. For example, any of the various components described herein and/or depicted in the Figures may be combined, interchanged, or excluded from other embodiments.

"A system having at least one of A, B, and C" (likewise "a system having at least one of A, B, or C" and "a system having at least one of A, B, C") includes systems that have A alone, B alone, C alone, A and B together, A and C together, B and C together, and/or A, B, and C together, etc.

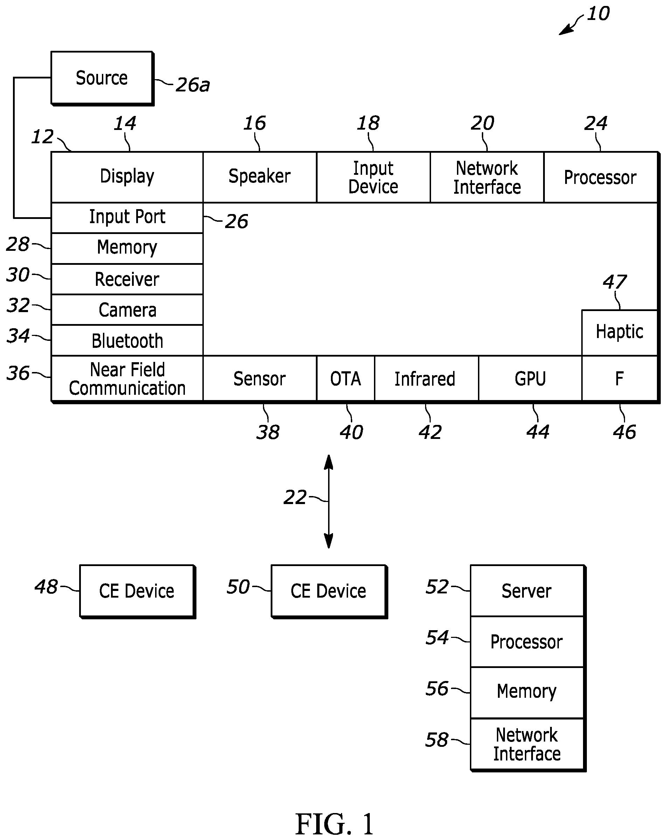

Now specifically referring to Figure 1, an example system 10 is shown, which may include one or more of the example devices mentioned above and described further below in accordance with present principles. The first of the example devices included in the system 10 is a consumer electronics (CE) device such as an audio video device (AVD) 12 such as but not limited to an Internet-enabled TV with a TV tuner (equivalently, set top box controlling a TV). The AVD 12 alternatively may also be a computerized Internet enabled ("smart") telephone, a tablet computer, a notebook computer, a HMD, a wearable computerized device, a computerized Internet-enabled music player, computerized Internet-enabled headphones, a computerized Internet-enabled implantable device such as an implantable skin device, etc. Regardless, it is to be understood that the AVD 12 is configured to undertake present principles (e.g., communicate with other CE devices to undertake present principles, execute the logic described herein, and perform any other functions and/or operations described herein).

Accordingly, to undertake such principles the AVD 12 can be established by some or all of the components shown in Figure 1. For example, the AVD 12 can include one or more displays 14 that may be implemented by a high definition or ultra-high definition "4K" or higher flat screen and that may be touch-enabled for receiving user input signals via touches on the display. The AVD 12 may include one or more speakers 16 for outputting audio in accordance with present principles, and at least one additional input device 18 such as an audio receiver/microphone for entering audible commands to the AVD 12 to control the AVD 12. The example AVD 12 may also include one or more network interfaces 20 for communication over at least one network 22 such as the Internet, an WAN, an LAN, etc. under control of one or more processors 24. A graphics processor may also be included. Thus, the interface 20 may be, without limitation, a Wi-Fi transceiver, which is an example of a wireless computer network interface, such as but not limited to a mesh network transceiver. It is to be understood that the processor 24 controls the AVD 12 to undertake present principles, including the other elements of the AVD 12 described herein such as controlling the display 14 to present images thereon and receiving input therefrom. Furthermore, note the network interface 20 may be a wired or wireless modem or router, or other appropriate interface such as a wireless telephony transceiver, or Wi-Fi transceiver as mentioned above, etc.

In addition to the foregoing, the AVD 12 may also include one or more input ports 26 such as a high-definition multimedia interface (HDMI) port or a USB port to physically connect to another CE device and/or a headphone port to connect headphones to the AVD 12 for presentation of audio from the AVD 12 to a user through the headphones. For example, the input port 26 may be connected via wire or wirelessly to a cable or satellite source 26a of audio video content. Thus, the source 26a may be a separate or integrated set top box, or a satellite receiver. Or the source 26a may be a game console or disk player containing content. The source 26a when implemented as a game console may include some or all of the components described below in relation to the CE device 44.

The AVD 12 may further include one or more computer memories 28 such as disk-based or solid-state storage that are not transitory signals, in some cases embodied in the chassis of the AVD as standalone devices or as a personal video recording device (PVR) or video disk player either internal or external to the chassis of the AVD for playing back AV programs or as removable memory media. Also, in some embodiments, the AVD 12 can include a position or location receiver such as but not limited to a cellphone receiver, GPS receiver and/or altimeter 30 that is configured to receive geographic position information from a satellite or cellphone base station and provide the information to the processor 24 and/or determine an altitude at which the AVD 12 is disposed in conjunction with the processor 24. The component 30 may also be implemented by an inertial measurement unit (IMU) that typically includes a combination of accelerometers, gyroscopes, and magnetometers to determine the location and orientation of the AVD 12 in three dimensions.

Continuing the description of the AVD 12, in some embodiments the AVD 12 may include one or more cameras 32 that may be a thermal imaging camera, a digital camera such as a webcam, and/or a camera integrated into the AVD 12 and controllable by the processor 24 to gather pictures/images and/or video in accordance with present principles. Also included on the AVD 12 may be a Bluetooth transceiver 34 and other Near Field Communication (NFC) element 36 for communication with other devices using Bluetooth and/or NFC technology, respectively. An example NFC element can be a radio frequency identification (RFID) element.

Further still, the AVD 12 may include one or more auxiliary sensors 38 (e.g., a motion sensor such as an accelerometer, gyroscope, cyclometer, or a magnetic sensor, an infrared (IR) sensor, an optical sensor, a speed and/or cadence sensor, a gesture sensor (e.g., for sensing gesture command), providing input to the processor 24. The AVD 12 may include an over-the-air TV broadcast port 40 for receiving OTA TV broadcasts providing input to the processor 24. In addition to the foregoing, it is noted that the AVD 12 may also include an infrared (IR) transmitter and/or IR receiver and/or IR transceiver 42 such as an IR data association (IRDA) device. A battery (not shown) may be provided for powering the AVD 12, as may be a kinetic energy harvester that may turn kinetic energy into power to charge the battery and/or power the AVD 12. A graphics processing unit (GPU) 44 and field programmable gated array 46 also may be included. One or more haptics generators 47 may be provided for generating tactile signals that can be sensed by a person holding or in contact with the device.

Still referring to Figure 1, in addition to the AVD 12, the system 10 may include one or more other CE device types. In one example, a first CE device 48 may be a computer game console that can be used to send computer game audio and video to the AVD 12 via commands sent directly to the AVD 12 and/or through the below-described server while a second CE device 50 may include similar components as the first CE device 48. In the example shown, the second CE device 50 may be configured as a computer game controller manipulated by a player or a head-mounted display (HMD) worn by a player. In the example shown, only two CE devices are shown, it being understood that fewer or greater devices may be used. A device herein may implement some or all of the components shown for the AVD 12. Any of the components shown in the following figures may incorporate some or all of the components shown in the case of the AVD 12.

Now in reference to the afore-mentioned at least one server 52, it includes at least one server processor 54, at least one tangible computer readable storage medium 56 such as disk-based or solid-state storage, and at least one network interface 58 that, under control of the server processor 54, allows for communication with the other devices of Figure 1 over the network 22, and indeed may facilitate communication between servers and client devices in accordance with present principles. Note that the network interface 58 may be, e.g., a wired or wireless modem or router, Wi-Fi transceiver, or other appropriate interface such as, e.g., a wireless telephony transceiver.

Accordingly, in some embodiments the server 52 may be an Internet server or an entire server "farm" and may include and perform "cloud" functions such that the devices of the system 10 may access a "cloud" environment via the server 52 in example embodiments for, e.g., network gaming applications. Or the server 52 may be implemented by one or more game consoles or other computers in the same room as the other devices shown in Figure 1 or nearby.

The components shown in the following figures may include some or all components shown in Figure 1.

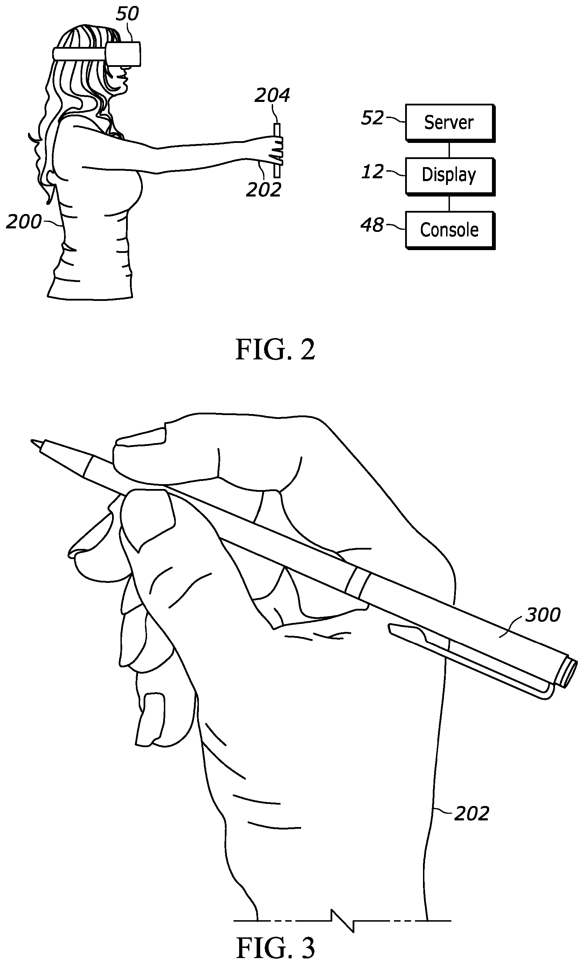

Figure 2 illustrates the CE device 50 of Figure 1 implemented as an augmented reality (AR) or virtual reality (VR) HMD worn by a person 200, the second CE device 48 implemented as a computer simulation console such as a computer game console, the AVD 12 implemented as a display device, and the server 52 implemented as a source of computer simulations for presentation on the display 12. The components discussed herein may include some or all of the components discussed above, including processors, communication interfaces, computer storages, cameras, and the like and may communicate with each other in effecting principles described herein using wired and/or wireless communication paths.

As shown in Figure 2, the person 200 is holding, in a hand 202 in a clenched fist pose, an object 204 such as a wand, stick, pen, electronic drumstick, electronic ruler, or other elongated object. However, it is to be further understood that objects of other shapes may also be used consistent with present principles. The object 204 also need not necessarily be symmetric but may still, in certain examples, span at least the length of an average person's hand from the bottom of the palm to the tip of the middle finger for more accurate identification via a camera.

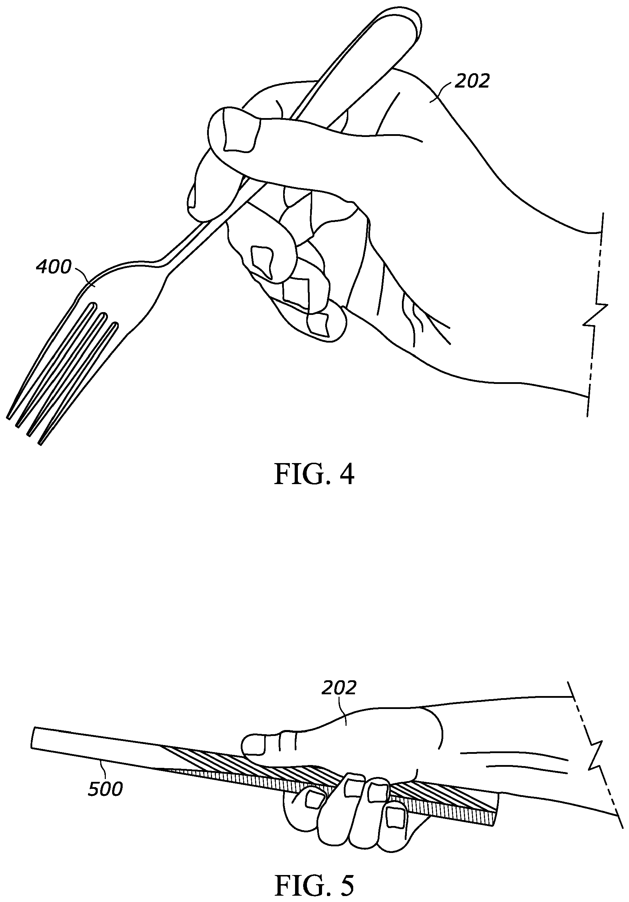

Thus, a camera on any of the devices 12, 48, 50 may be used to generate images of the hand 202 and object 204, which are processed by one or more processors implemented in any of the devices herein to track the hand 202 and object 204, including the pose of the hand 202. In other words, the image recognition/computer vision (CV) algorithm employed by the processor recognizes the fingers and the pose of the hand with respect to the object 204 so that different hand poses may be differentiated from each other based on hand interaction with the object. For example, the hand 202 in a pose for holding a pen 300 (Figure 3) is differentiated from the hand in a pose for holding an eating utensil 400 (Figure 4) and from the hand 202 in a pose for holding a wand 500 (Figure 5). These are non-limiting examples of the types of hand poses that can be used consistent with present principles.

However, further note that hand poses and particular hand contact points along the object 204 may also be determined using various other sensors in addition to or in lieu of a camera, in any appropriate combination. For example, pressure sensors and capacitive or resistive touch sensors located at various points along the exterior of the object's housing may be used to determine hand pose/contact points. Ultrasound transceivers within the object 204 may also be used to survey the surface of the object 204 for determining hand pose/contact points, as may strain sensors to identify where the object's housing is warping to thus infer contact points at warp points.

Fingerprint readers may also be located on the housing of the object 204 for similar purposes, and may even be used specifically to disambiguate a person's thumb (via registered thumbprint) from the person's pinkie (via registered pinkie print) in certain examples. E.g., the person 200 may be identified as virtually revving of a virtual motorcycle by pressing his or her thumb against the object 204, and virtually braking the virtual motorcycle using different fingers and/or a clenching motion around the object 204. Fingerprint readers may even disambiguate palm skin patterns from back of the hand skin patterns in certain examples.

Likewise, various poses/orientations for the object 204 itself may be determined using other sensors within the object 204 in addition to or in lieu of using a camera. Those other sensors might include motion sensors such as gyroscopes, accelerometers, and magnetometers. Lights on the object 204, such as infrared (IR) light emitting diodes (LEDs), may also be used for tracking the position, orientation, and/or pose of the object 204 using an IR camera. Other, possibly unique identifiers located at different parts of the housing of the object 204, such as unique stamps or QR codes, may also be used for enhanced object tracking using a non-IR or IR camera. Further note that differently-shaped portions of the object 204 may also be tracked, as recognized using a camera, for determining object orientation/pose.

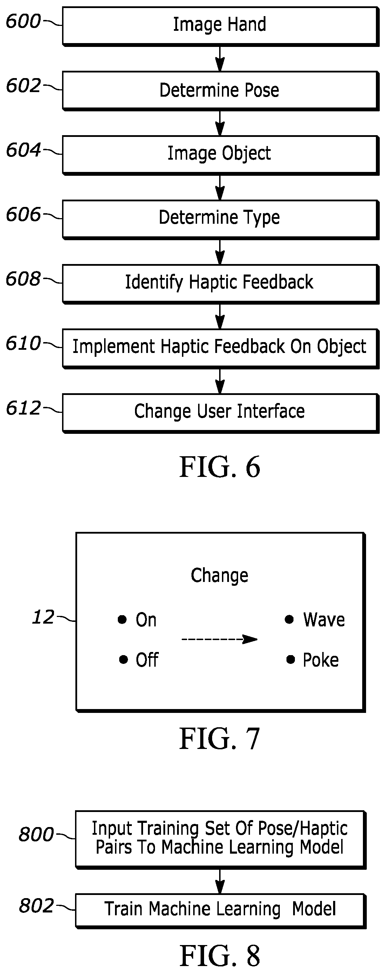

Figure 6 further illustrates present principles. Commencing at block 600, the hand is imaged and the pose identified at block 602 using a camera and image recognition/CV techniques (and/or using the other sensors described above). If desired, the object being held by the hand is also imaged at block 604 and then its type and pose/orientation identified at block 606. Note further that the object's pose/orientation may also be identified at block 606 using other sensors described above. Then based on the pose of the hand and, if desired, also based on the type of object and pose/orientation of the object, haptic feedback is identified at block 608. A signal is then sent to the object which activates one or more haptic generators or vibrators in the object to implement the haptic feedback on the object at block 610.

Thus, while holding the physical object in a certain way, one or a set of haptic feedbacks can be experienced. For example, when the pose of the hand is in a configuration like holding a pen as shown in Figure 3, haptic feedback may be generated on the pen/object to mimic the tactile sensation of writing on a surface or erasing (e.g., in lateral directions relative to the real or virtual writing surface itself). Additional resistance may also be applied at the pen tip as coming from a direction of the real or virtual writing surface, possibly along a longitudinal axis of the pen. In contrast, when the pose of the hand is in a fist as shown in Figure 2, haptic feedback may be generated on the object being held to mimic the tactile sensation of the object in hand (e.g., haptic feedback along the length and circumference of portions of the elongated object identified as being held, but no haptic feedback at other object locations). Haptic feedback that can be correlated to a hand pose and, if desired, an object type includes intermittent buzzing, continuous shaking, isolated bumps.

Furthermore, as indicated at block 612 of Figure 6, an on-screen controller or interface as shown in Figure 7 may be changed (in the example shown, from a user interface (UI) facilitating on/off to a UI facilitating waving or poking motion of the object in the simulated world) based on the changing pose of the hand. For example, an on/off UI may be presented responsive to the object being held as a pen, while the waving or poking motion UI may be presented responsive to the object being held as a wand. Note that the UI may be presented on any display described herein, e.g., on the HMD or on the AVDD 12.

Figure 8 illustrates training steps for training a machine learning (ML) model such as one or more neural networks including convolutional neural networks (CNN) and/or recurrent NNs (RNNs). At block 800, a training set of pairs of hand/object pose images and corresponding haptic feedbacks for each pose combination is input to the ML model. The ML model is trained at block 802 using the training set.

The training set of images may include 3D images of human hands in various poses from various perspectives while holding a respective object consistent with present principles, along with respective ground truth haptic feedbacks desired to be correlated with the poses. In some specific examples, particular contact points at which various parts of the hand contact the object for a given pose may be correlated to particular ground truth haptic feedback spatial distributions along the object and possibly at the contact points themselves. Object types may also be included in the training set in certain examples so that when the ML model executes the logic of Figure 6 it may also account for object type in selecting the haptic feedback so that, for example, harder or denser objects generate higher-intensity haptic feedback than softer or less dense objects.

Accordingly, it is to be understood that present principles may employ machine learning models, including deep learning models. Machine learning models use various algorithms trained in ways that include supervised learning, unsupervised learning, semi-supervised learning, reinforcement learning, feature learning, self learning, and other forms of learning. Examples of such algorithms, which can be implemented by computer circuitry, include one or more neural networks, such as a convolutional neural network (CNN), recurrent neural network (RNN) which may be appropriate to learn information from a series of images, and a type of RNN known as a long short-term memory (LSTM) network. Support vector machines (SVM) and Bayesian networks also may be considered to be examples of machine learning models.

As understood herein, performing machine learning involves accessing and then training a model on training data to enable the model to process further data to make predictions. A neural network may include an input layer, an output layer, and multiple hidden layers in between that that are configured and weighted to make inferences about an appropriate output.

In thus using the above, an ML model can be trained for dynamic, on-the-fly haptic feedback generation over time along various points on the object itself, depending on hand pose, known contact points/grip of the hand against various locations of the object, and/or the object's own pose/orientation (as the object's pose possibly changes over time). Known object physics for haptic feedback for a given object, as preprogrammed by a developer or provided by the computer simulation itself, may therefore be applied differently for a given computer simulation effect depending on which hand pose/object pose combination is being used, which points of the object are contacted by the person's hand, and/or the desired effect itself according to whatever is being simulated haptically as part of the computer simulation.

Put differently, certain haptics that would be experienced at various discrete points along the object, per corresponding hand pose/grip combinations, may be preprogrammed for producing a given haptic sensation corresponding to a certain virtual action. Then those haptics may actually be applied at the identified contact points themselves according to actual similar hand poses. Also, other haptics for other poses/hand grips (but possibly for the same virtual action) may then be inferred using this preprogramming and the trained ML model itself. Thus, haptic feedbacks for the same computer simulation effect may be rendered differently according to the actual contact points of the hand, hand pose, and the object's own pose so that the rendered haptics vary based on whether the object is held, e.g., in the palm, or open-handed, or with only fingers, etc.

Also note here that the haptic feedbacks themselves may be generated using various vibration generators positioned at various points within the object itself. Each vibration generator may include, for example, an electric motor connected to an off-center and/or off-balanced weight via the motor's rotatable shaft so that the shaft may rotate under control of the motor (which in turn may be controlled by a processor such as the processor 24) to create vibration of various frequencies and/or amplitudes as well as force simulations in various directions. The haptics produced by the vibration generators may therefore mimic similar vibrations/forces for the corresponding virtual element of the simulation itself that is represented by the real-world object. Again note that the simulation may be a computer game or other three-dimensional or VR simulation, for example.

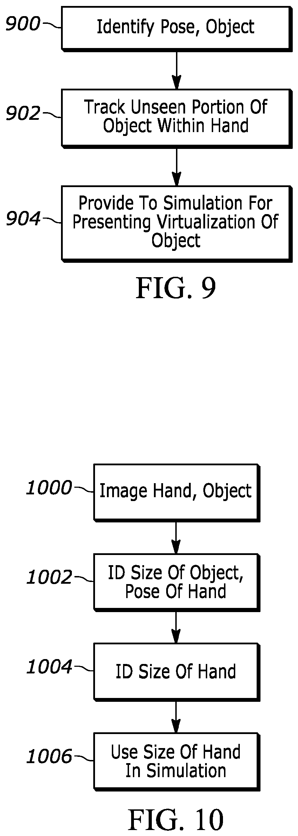

Figure 9 illustrates additional principles. Commencing at block 900, images of the hand and object are used to identify the pose of the hand and the type of object. Moving to block 902, as the hand moves, the unseen portions of the object in the hand can be tracked along with the portions of the object that can be imaged, and an amalgamation of the unseen portions of the object and imaged portions of the object used at block 904 to present a virtualization of the object within a computer simulation, e.g., as if seen through a transparent hand. It is to be understood that a ML model can be used in this regard, trained according to the principles above on a training set of images of hand poses holding objects with ground truth representations of the unseen portions of the objects within the hands. Also note that at block 902, unseen hand contact points may be extrapolated using CV based on seen portions of the hand pose, seen contact points, and/or seen object portions in order to perform haptics rendering as described herein.

Figure 10 illustrates that the size of the hand 202 may be calibrated assuming the object being held is of a known size. Commencing at block 1000, the hand and object are imaged. At block 1002 the size of the object is identified by using image recognition to identify the object and then accessing a data structure correlating the object ID with a size. The pose of the hand may also be identified. The size of the object and pose of the hand are used at block 1004 to identify the size of the hand. This may be done using a ML model trained on a training set of images of hands in various poses holding objects of known sizes, along with ground truth hand sizes. The size of the hand may be used at block 1006 in a computer simulation, e.g., to render a correctly sized virtualization of the hand holding a virtualization of various objects.

Note that information about the position, orientation, and type of object being held may also be used to correct hand tracking without the need for additional electronics, relying only on the CV-based system if desired. Thus, disambiguating a front face of a hand from a back face of the hand, as well as a pinkie finger from a thumb for example, may be performed based on CV-based tracking using hand grip in combination with object orientation, even if certain portions of the hand or object are occluded from camera view.

Additionally, grip pose and object pose may also be used to distinguish fine motor interactions with virtual objects in a simulation from gross motor interactions based on how the corresponding real-world object is held and in which orientation to assist the device in determining which type of motor interaction is being performed. For example, as part of playing a video game, holding the object like a spoon to pick a virtual object up off the virtual ground may entail fine motor skills, while holding the object throughout the palm of the hand to swing the object from up to down in a quick fashion for virtual fighting may entail gross motor skills. Virtual handshaking with a virtual character may also entail fine motor skills, and in some examples haptics may be generated at the real world object itself that is being gripped to mimic the real-world object being the hand of the virtual character that is being shaken. Thus, haptics may be dynamically generated and be simulation context-sensitive, as well as context-sensitive to what the person is doing and how they are holding the real-world object.

It will be appreciated that whilst present principles have been described with reference to some example embodiments, these are not intended to be limiting, and that various alternative arrangements may be used to implement the subject matter claimed herein.

## Claims

1. A method, comprising:
identifying (600, 602, 604), from at least an image of a hand (202) holding a physical object (204) comprising at least one haptic generator, the pose of the hand and fingers with respect to the physical object;
identifying a haptic feedback (608) based at least in part on the identified fingers and pose of the hand with respect to the physical object; and
implementing the haptic feedback (610) on the object to produce a tactile signal in accordance with the pose of the hand in the image.

2. The method of Claim 1, wherein the pose is a first pose, the haptic feedback is first haptic feedback, and the method further comprises:
identifying a second pose of the hand holding an object;
based at least in part on the second pose, identifying a second haptic feedback; and
implementing the second haptic feedback on the object.

3. The method of Claim 2, wherein the object on which the second haptic feedback is implemented is a same object on which the first haptic feedback is implemented.

4. The method of Claim 2, wherein the object on which the second haptic feedback is implemented is a different object than the object on which the first haptic feedback is implemented.

5. The method of Claim 1, comprising:
based at least in part on the pose, altering at least one user interface (UI).

6. The method of Claim 1, comprising:
based on a size of the object, identifying a size of the hand; and
using the size of the hand, presenting on at least one display a virtualization of the hand.

7. The method of Claim 1, comprising:
based at least in part on the image, tracking a portion of the object hidden by the hand in the image; and
presenting on at least one display a virtualization of the object based at least in part on the tracking.

8. An apparatus (10, 50), comprising:
an augmented reality (AR) head-mounted display (HMD) (50);
at least one physical object (204) comprising at least one haptic generator; and
at least one camera for imaging a hand (202) of a wearer of the HMD holding the physical object to generate an image for being provided to at least one processor configured to
identify from the image fingers and a pose of the hand with respect to the physical object;
identify a haptic feedback based at least in part on the identified fingers and pose of the hand with respect to the physical object,; and
produce, using the haptic generator, a tactile signal in accordance with the identified haptic feedback.

9. The apparatus of Claim 8, wherein the pose is a first pose, the tactile signal is a first tactile signal, and a second tactile signal is produced by the haptic generator responsive to the hand being in a second pose.

10. The apparatus of Claim 8, wherein the pose causes alteration of at least one user interface (UI) presented on the HMD.

11. The apparatus of Claim 8, wherein based on a size of the object in the image, a size of the hand is identified and used to present a visualization of the hand on the HMD.

12. The apparatus of Claim 8, wherein based at least in part on the image, a portion of the object hidden by the hand in the image is tracked for presenting on the HMD a virtualization of the object.

13. A non-transitory computer storage that comprises instructions executable by at least one processor to carry out the method of claim 1.

14. The computer storage of Claim 13, wherein the instructions are executable to:
receive at least a second image;
identify from the second image a second pose of the hand holding an implement;
correlate the second pose to a second haptic signal; and
implement the second haptic signal on the implement.

15. The computer storage of Claim 14, wherein the implement is one selected from the list consisting of:
i. the first object; and
ii. a second object different from the first object.

## Patentansprüche

1. Verfahren, umfassend:
Identifizieren (600, 602, 604), aus mindestens einem Bild einer Hand (202), die ein physisches Objekt (204) hält, umfassend mindestens einen haptischen Generator, der Pose der Hand und der Finger in Bezug auf das physische Objekt;
Identifizieren einer haptischen Rückmeldung (608) basierend mindestens teilweise auf den identifizierten Fingern und der Pose der Hand in Bezug auf das physische Objekt; und
Implementieren der haptischen Rückmeldung (610) auf dem Objekt, um ein taktiles Signal gemäß der Pose der Hand in dem Bild zu erzeugen.

2. Verfahren nach Anspruch 1, wobei die Pose eine erste Pose ist, die haptische Rückmeldung eine erste haptische Rückmeldung ist und das Verfahren ferner umfasst:
Identifizieren einer zweiten Pose der Hand, die ein Objekt hält;
basierend mindestens teilweise auf der zweiten Pose, Identifizieren einer zweiten haptischen Rückmeldung; und
Implementieren der zweiten haptischen Rückmeldung auf dem Objekt.

3. Verfahren nach Anspruch 2, wobei das Objekt, auf dem die zweite haptische Rückmeldung implementiert wird, ein gleiches Objekt ist, auf dem die erste haptische Rückmeldung implementiert wird.

4. Verfahren nach Anspruch 2, wobei das Objekt, auf dem die zweite haptische Rückmeldung implementiert wird, ein anderes Objekt als das Objekt ist, auf dem die erste haptische Rückmeldung implementiert wird.

5. Verfahren nach Anspruch 1, umfassend:
basierend mindestens teilweise auf der Pose, Ändern mindestens einer Benutzerschnittstelle (UI).

6. Verfahren nach Anspruch 1, umfassend:
basierend auf einer Größe des Objekts, Identifizieren einer Größe der Hand; und
unter Verwendung der Größe der Hand, Darstellen, auf mindestens einer Anzeige, einer Virtualisierung der Hand.

7. Verfahren nach Anspruch 1, umfassend:
basierend mindestens teilweise auf dem Bild, Verfolgen eines Abschnitts des Objekts, der durch die Hand in dem Bild verdeckt ist; und
Darstellen, auf mindestens einer Anzeige, einer Virtualisierung des Objekts basierend mindestens teilweise auf dem Verfolgen.

8. Einrichtung (10, 50), umfassend:
eine am Kopf befestigte Anzeige (HMD) (50) für erweiterte Realität (AR);
mindestens ein physisches Objekt (204), umfassend mindestens einen haptischen Generator; und
mindestens eine Kamera zum Abbilden einer Hand (202) eines Trägers der HMD, die das physische Objekt hält, um ein Bild zu generieren, um mindestens einem Prozessor bereitgestellt zu werden, der konfiguriert ist zum
Identifizieren, aus dem Bild, von Fingern und einer Pose der Hand in Bezug auf das physische Objekt;
Identifizieren einer haptischen Rückmeldung basierend mindestens teilweise auf den identifizierten Fingern und der Pose der Hand in Bezug auf das physische Objekt,; und
Erzeugen, unter Verwendung des haptischen Generators, eines taktilen Signals gemäß der identifizierten haptischen Rückmeldung.

9. Einrichtung nach Anspruch 8, wobei die Pose eine erste Pose ist, das taktile Signal ein erstes taktiles Signal ist und ein zweites taktiles Signal durch den haptischen Generator als Reaktion darauf erzeugt wird, dass sich die Hand in einer zweiten Pose befindet.

10. Einrichtung nach Anspruch 8, wobei die Pose eine Änderung mindestens einer Benutzerschnittstelle (UI), die auf der HMD dargestellt wird, bewirkt.

11. Einrichtung nach Anspruch 8, wobei, basierend auf einer Größe des Objekts in dem Bild, eine Größe der Hand identifiziert und verwendet wird, um eine Visualisierung der Hand auf der HMD darzustellen.

12. Einrichtung nach Anspruch 8, wobei, basierend mindestens teilweise auf dem Bild, ein Abschnitt des Objekts, der durch die Hand in dem Bild verdeckt wird, zum Darstellen, auf der HMD, einer Virtualisierung des Objekts verfolgt wird.

13. Nichtflüchtiger Computerspeicher, der Anweisungen umfasst, die durch mindestens einen Prozessor ausführbar sind, um das Verfahren nach Anspruch 1 durchzuführen.

14. Computerspeicher nach Anspruch 13, wobei die Anweisungen ausführbar sind zum:
Empfangen mindestens eines zweiten Bilds;
Identifizieren, aus dem zweiten Bild, einer zweiten Pose der Hand, die ein Gerät hält;
Korrelieren der zweiten Pose mit einem zweiten haptischen Signal; und
Implementieren des zweiten haptischen Signals auf dem Gerät.

15. Computerspeicher nach Anspruch 14, wobei das Gerät eines ist, das aus der Liste ausgewählt ist, bestehend aus:
i. dem ersten Objekt; und
ii. einem zweiten Objekt, das anders als das erste Objekt ist.

## Revendications

1. Procédé, comprenant :
l'identification (600, 602, 604), à partir d'au moins une image d'une main (202) tenant un objet physique (204) comprenant au moins un générateur haptique, de la pose de la main et des doigts par rapport à l'objet physique ;
l'identification d'un retour haptique (608) sur la base, au moins en partie, des doigts identifiés et de la pose de la main par rapport à l'objet physique ; et
la mise en œuvre du retour haptique (610) sur l'objet pour produire un signal tactile conformément à la pose de la main dans l'image.

2. Procédé selon la revendication 1, dans lequel la pose est une première pose, le retour haptique est un premier retour haptique, et le procédé comprend en outre :
l'identification d'une seconde pose de la main tenant un objet ;
sur la base au moins en partie de la seconde pose, l'identification d'un second retour haptique ; et
la mise en œuvre du second retour haptique sur l'objet.

3. Procédé selon la revendication 2, dans lequel l'objet sur lequel le second retour haptique est mis en œuvre est un même objet sur lequel le premier retour haptique est mis en œuvre.

4. Procédé selon la revendication 2, dans lequel l'objet sur lequel le second retour haptique est mis en œuvre est un objet différent de l'objet sur lequel le premier retour haptique est mis en œuvre.

5. Procédé selon la revendication 1, comprenant :
sur la base, au moins en partie, de la pose, la modification d'au moins une interface utilisateur (UI).

6. Procédé selon la revendication 1, comprenant :
sur la base d'une taille de l'objet, l'identification d'une taille de la main ; et
au moyen de la taille de la main, la présentation sur au moins un écran d'une virtualisation de la main.

7. Procédé selon la revendication 1, comprenant :
sur la base au moins en partie de l'image, le suivi d'une partie de l'objet cachée par la main dans l'image ; et
la présentation sur au moins un écran d'une virtualisation de l'objet sur la base au moins en partie du suivi.

8. Appareil (10, 50), comprenant :
un visiocasque (HMD) de réalité augmentée (RA) (50) ;
au moins un objet physique (204) comprenant au moins un générateur haptique ; et
au moins une caméra pour imager une main (202) d'un porteur du HMD tenant l'objet physique afin de générer une image destinée à être fournie à au moins un processeur configuré pour
identifier à partir de l'image des doigts et une pose de la main par rapport à l'objet physique ;
identifier un retour haptique sur la base au moins en partie des doigts identifiés et de la pose de la main par rapport à l'objet physique ; et
produire, au moyen du générateur haptique, un signal tactile conformément au retour haptique identifié.

9. Appareil selon la revendication 8, dans lequel la pose est une première pose, le signal tactile est un premier signal tactile, et un second signal tactile est produit par le générateur haptique en réponse au fait que la main est dans une seconde pose.

10. Appareil selon la revendication 8, dans lequel la pose provoque la modification d'au moins une interface utilisateur (UI) présentée sur le HMD.

11. Appareil selon la revendication 8, dans lequel, sur la base d'une taille de l'objet dans l'image, une taille de la main est identifiée et utilisée pour présenter une visualisation de la main sur le HMD.

12. Appareil selon la revendication 8, dans lequel, sur la base au moins en partie de l'image, une partie de l'objet cachée par la main dans l'image est suivie pour présenter sur le HMD une virtualisation de l'objet.

13. Unité de stockage informatique non transitoire qui comprend des instructions exécutables par au moins un processeur pour réaliser le procédé selon la revendication 1.

14. Unité de stockage informatique selon la revendication 13, dans laquelle les instructions sont exécutables pour :
recevoir au moins une seconde image ;
identifier à partir de la seconde image une seconde pose de la main tenant un outil ;
corréler la seconde pose à un second signal haptique ; et
mettre en œuvre le second signal haptique sur l'outil.

15. Unité de stockage informatique selon la revendication 14, dans laquelle l'outil est au moins un élément sélectionné parmi la liste constituée :
i. du premier objet ; et
ii. d'un second objet différent du premier objet.
